# EUROPEAN PATENT APPLICATION

(11) **EP 2 490 347 A1**
(43) Date of publication of application: **22.08.2012**
(21) Application number: 12001066.5
(22) Date of filing: 17.02.2012
(51) Int. Cl.: H04B 7/08

(54) **Method of controlling receive diversity for battery lifetime improvement and related communication device**

(30) Priority: 18.02.2011 US 201113444144
(71) Applicant: HTC Corporation, Taoyuan County 330 (TW)
(72) Inventor: Huang, Chien-Jen, Taoyuan City Taoyuan County 330 (TW); Shu, Haw-Wei, Taoyuan City Taoyuan County 330 (TW)
(74) Representative: Emde, Eric

(57) **Abstract**

A method of handling receive diversity of a mobile device in a wireless communication system for the mobile device is disclosed. The method comprises determining a plurality of corresponding conditions of a plurality of services supported by the mobile device; and controlling the receive diversity according to the plurality of corresponding conditions, for receiving data transmitted by a network of the wireless communication system.

## Description

### Cross Reference To Related Applications

This application claims the benefit of U.S. Provisional Application No. 61/444,144, filed on Feb. 18, 2011 and entitled "Dynamic Receive Diversity Control for Battery Lifetime Improvement", the contents of which are incorporated herein in their entirety.

### Background of the Invention

### 1. Field of the Invention

The present invention relates to a method used in a wireless communication system and related communication device, and more particularly, to a method of controlling receive diversity to reduce power consumption and related communication device.

### 2. Description of the Prior Art

A long-term evolution (LTE) system supporting the 3GPP Rel-8 standard and/or the 3GPP Rel-9 standard are developed by the 3rd Generation Partnership Project (3GPP) as a successor of a universal mobile telecommunications system (UMTS), for further enhancing performance of the UMTS to satisfy increasing needs of users. The LTE system includes a new radio interface and a new radio network architecture that provides a high data rate, low latency, packet optimization, and improved system capacity and coverage. In the LTE system, a radio access network known as an evolved universal terrestrial radio access network (E-UTRAN) includes multiple evolved Node-Bs (eNBs) for communicating with multiple UEs, and communicates with a core network including a mobility management entity (MME), a serving gateway, etc., for Non Access Stratum (NAS) control.

A LTE-advanced (LTE-A) system, as its name implies, is an evolution of the LTE system. The LTE-A system targets faster switching between power states, improves performance at the coverage edge of an eNB, and includes advanced techniques, such as carrier aggregation (CA), coordinated multipoint transmission/reception (CoMP), UL multiple-input multiple-output (MIMO), etc. For a UE and an eNB to communicate with each other in the LTE-A system, the UE and the eNB must support standards developed for the LTE-A system, such as the 3GPP Rel-10 standard or later versions.

When the UE is in an urban area (e.g. a city), the UE is usually interfered by multipath fading. That is, after the eNB transmits a signal to the UE, the UE receives a received signal which is a combination of multiple delayed versions of the transmitted signal. When the delayed versions of the transmitted signal are combined noncoherently, the received signal may be in a deep fade (i.e., nulled) , and cannot be easily and even correctly recovered. Thus, performance (e.g. throughput) of the UE is degraded. In this situation, the UE can use receive diversity to mitigate the multipath fading. In other words, multiple receive antennas are installed in the UE, and are turned on for receiving (e.g. collecting and combining) the delayed versions of the transmitted signal. Therefore, the delayed versions of the transmitted signal received via the receive antennas can be combined into a combined signal experiencing the deep fade with a much lower probability. As a result, the multipath fading is mitigated. Besides, since the eNB does not need to increase transmitting power for mitigating the multipath fading to maintain a high-quality link between the eNB and the UE, coverage of the eNB can be extended and/or additional resources can be saved. Please note that, the UE needs to consume additional power for operating the receive diversity. That is, the UE consumes the additional power to improve the performance.

However, the UE may receive no data in some situations, e.g. when the UE does not access any service. In this situation, the power is wasted if the receive diversity is turned on. Oppositely, if the UE receives data for a service without using the receive diversity, the performance may degrade due to the multipath fading. Therefore, the receive diversity should be controlled, and is preferably turned off when not needed and turned on when needed. Thus, how to control the receive diversity for reducing the power consumption to improve battery lifetime while preserving the performance is a topic to be discussed and addressed.

### Summary of the Invention

The present invention therefore provides a method and related communication device for controlling receive diversity of a UE to solve the abovementioned problems.

A method of handling receive diversity of a mobile device in a wireless communication system for the mobile device is disclosed. The method comprises determining a plurality of corresponding conditions of a plurality of services supported by the mobile device; and controlling the receive diversity according to the plurality of corresponding conditions, for receiving data transmitted by a network of the wireless communication system.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system according to an example of the present invention.

Fig. 2 is a schematic diagram of a communication device according to an example of the present invention.

Fig. 3 is a schematic diagram of communication protocol layers for a wireless communication system according to an example of the present invention.

Fig. 4 is a flowchart of a process according to the present invention.

Fig. 5 is a flowchart of a process according to the present invention.

### Detailed Description

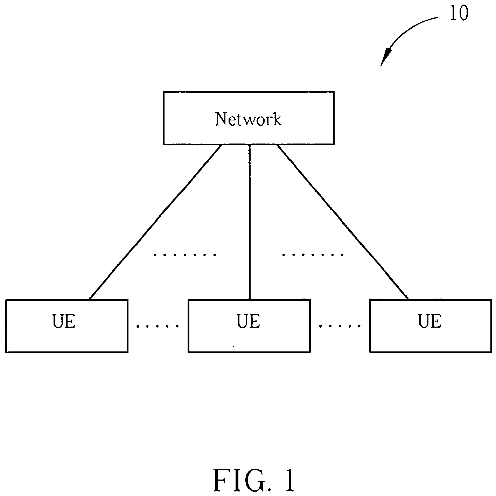

Please refer to Fig. 1, which is a schematic diagram of a wireless communication system 10 according to an example of the present invention. The wireless communication system 10 is briefly composed of a network and a plurality of user equipments (UEs). In Fig. 1, the network and the UEs are simply utilized for illustrating the structure of the wireless communication system 10. Practically, the network can be a universal terrestrial radio access network (UTRAN) comprising a plurality of Node-Bs (NBs) in a universal mobile telecommunications system (UMTS). Alternatively, the network can be an evolved UTRAN (E-UTRAN) comprising a plurality of evolved NBs (eNBs) and relays in a long term evolution (LTE) system or a LTE-Advanced (LTE-A) system, and is not limited herein. The UEs can be mobile devices such as mobile phones, laptops, tablet computers, electronic books, and portable computer systems. Besides, the network and a UE can be seen as a transmitter or a receiver according to transmission direction, e.g., for an uplink (UL) , the UE is the transmitter and the network is the receiver, and for a downlink (DL), the network is the transmitter and the UE is the receiver.

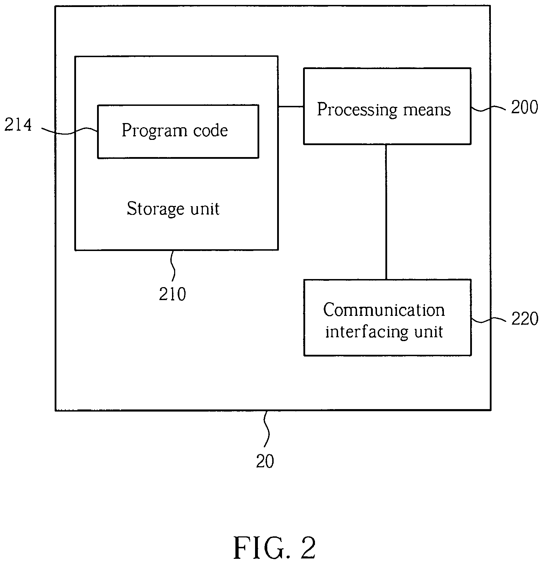

Please refer to Fig. 2, which is a schematic diagram of a communication device 20 according to an example of the present invention. The communication device 20 can be a UE or the network shown in Fig. 1, but is not limited herein. The communication device 20 may include a processor 200 such as a microprocessor or Application Specific Integrated Circuit (ASIC), a storage unit 210 and a communication interfacing unit 220. The storage unit 210 may be any data storage device that can store a program code 214, accessed and executed by the processor 200. Examples of the storage unit 210 include but are not limited to a subscriber identity module (SIM), read-only memory (ROM), flash memory, random-access memory (RAM), CD-ROM/DVD-ROM, magnetic tape, hard disk and optical data storage device. The communication interfacing unit 220 is preferably a transceiver and is used to transmit and receive signals according to processing results of the processor 200.

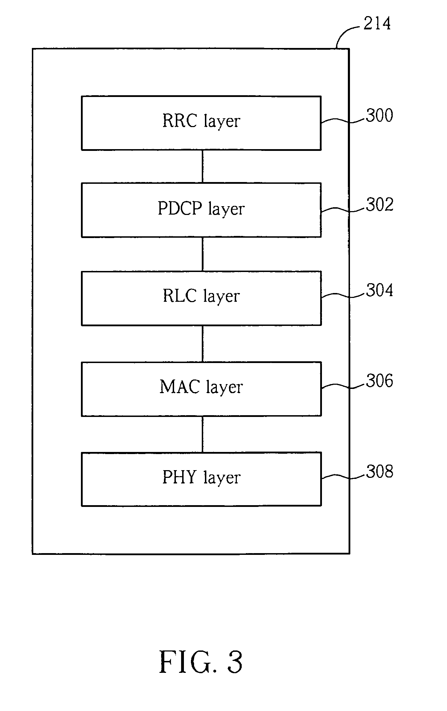

Please refer to Fig. 3, which illustrates a schematic diagram of communication protocol layers for the wireless communication system 10. The behaviors of some of the protocol layers may be defined in the program code 214 and executed by the processing means 200. The protocol layers from top to bottom are a radio resource control (RRC) layer 300, a packet data convergence protocol (PDCP) layer 302, a radio link control (RLC) layer 304, a medium access control (MAC) layer 306 and a physical (PHY) layer 308. The RRC layer 300 is used for performing broadcast, paging, RRC connection management, measurement reporting and control and radio bearer control responsible for generating or releasing radio bearers. The PDCP layer 302 is used for ciphering and integrity protection of transmissions, and maintaining delivery order during a handover. The RLC layer 304 is used for segmentation/concatenation of packets and maintaining delivery sequence when packet loses. The MAC layer 306 is responsible for a hybrid automatic repeat request (HARQ) process, multiplexing logical channels, a random access channel (RACH) procedure and maintaining a UL timing alignment. In each HARQ process, an acknowledgement (ACK) is reported to the network if the MAC data/control packet is received and decoded successfully. Otherwise, a negative acknowledgement (NACK) is reported to the network. The PHY layer 308 is used to provide physical channels. Fig. 3 simply illustrates the behaviors of the protocol layers conceptually, and the behaviors may be different for the UMTS, the LTE system and the LTE-A system.

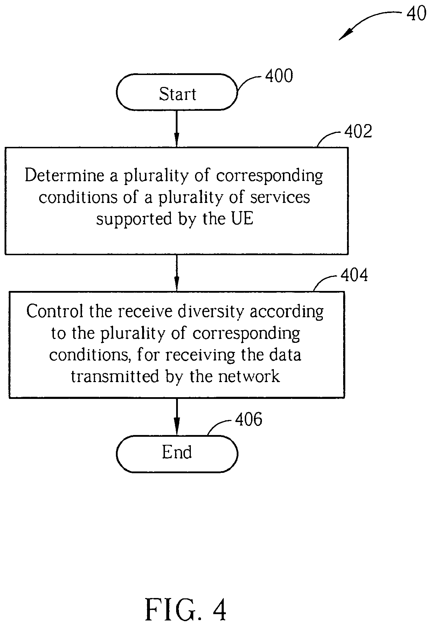

Please refer to Fig. 4, which is a flowchart of a process 40 according to an example of the present invention. The process 40 is utilized in a UE shown in Fig. 1, for handling receive diversity of the UE, to reduce power consumption of the UE. The UE supports the receive diversity, i.e., multiple receive antennas are installed in the UE. The process 40 may be compiled into the program code 214 and includes the following steps:

Step 400: Start.

Step 402: Determine a plurality of corresponding conditions of a plurality of services supported by the UE.

Step 404: Control the receive diversity according to the plurality of corresponding conditions, for receiving the data transmitted by the network.

Step 406: End.

According to the process 40, the UE determines a plurality of corresponding conditions of a plurality of services (e.g. voice and/or data) supported by the UE. Then, the UE controls the receive diversity according to the plurality of corresponding conditions, for receiving data transmitted by the network. That is, the UE does not always turns on the receive diversity (i.e., turns on the receive antennas), but controls the receive diversity (i.e., turns on/off the receive antennas) according to the plurality of corresponding conditions of the plurality of services. In other words, the UE turns on the receive diversity when needed for mitigating multipath fading to improve performance (e.g. throughput) of the UE, and turns off the receive diversity when not needed to reduce the power consumption of the UE. Therefore, not only the performance can be improved, but the power consumption can be saved.

Please note that, a spirit of the process 40 is that the UE turns on the receive diversity when needed for mitigating the multipath fading experienced to improve the performance (e.g. throughput) of the UE, and turns off the receive diversity when not needed to reduce the power consumption of the UE. Realization of the process 40 is not limited. For example, the UE can control the receive diversity by turning off the receive diversity if the plurality of corresponding conditions indicate that the plurality of services satisfy a plurality of corresponding requirements, respectively, and turning on the receive diversity if at least one of the plurality of corresponding conditions indicate that at least one of the plurality of services does not satisfy at least one of the plurality of corresponding requirements, respectively. In other words, if all the plurality of services supported by the UE satisfy the plurality of corresponding requirements, respectively, the UE turns off the receive diversity. If one of the plurality of services does not satisfy its corresponding requirement, the UE turns on the receive diversity or keeps the receive diversity operating, to improve the performance (e.g. throughput) of the UE. That is, the UE only turns off the receive diversity if the receive diversity is not needed for all the plurality of services (i.e., each service satisfies its corresponding requirement), otherwise the UE turns on the receive diversity.

Realization of whether a corresponding condition indicates that a service satisfies a corresponding requirement is not limited, as long as tradeoff between the performance and the power consumption can be properly made. For example, the corresponding condition can indicate that the service satisfies the corresponding requirement if the service is inactive, and the service does not satisfy the corresponding requirement if the service is active. Whether the service is inactive can be defined according to the tradeoff between the performance and the power consumption. For example, the corresponding condition can indicate that the service is inactive, if no data for the service is received by the UE during a time period. Further, if the UE does not transmit any data for the service, the UE may no need to receive any responding data for the service. Thus, the corresponding condition can also indicate that the service is inactive, if no data for the service is transmitted by the UE during a time period. Alternatively, the corresponding condition can indicate that the service is inactive, if an amount of data for the service stored in a buffer of the UE is lower than a predetermined threshold. Besides, the corresponding condition can indicate that the service is inactive according to an indication transmitted by the network, wherein the indication comprises information of an amount of data for the service to be received by the UE. That is, the UE knows when the data for the service can be received completely, and the UE can turns off the receive diversity after the data is completely received.

On the other hand, the corresponding condition can indicate that the service satisfies the corresponding requirement if a quality of the service is higher than a predetermined threshold, and the service does not satisfy the corresponding requirement if the quality of the service is lower than the predetermined threshold. That is, if the quality of the service is good enough, the UE does not need to turn on or operate the receive diversity for the service. Furthermore, the corresponding condition can indicate that the service satisfies the corresponding requirement if the service is a bursty service (e.g. web browsing, periodic updates or notifications of applications, etc.). That is, since an amount of data for the bursty service is usually small and transmissions of the data for the bursty service are usually intermittent, it is not efficient to turn on or operate the receive diversity for the bursty service. Besides, the corresponding condition can be any combination of received signal level, received signal quality, received signal-to-noise ratio (SNR), bit error rate (BER), symbol error rate (SER), frame error rate and block error rate, as long as the corresponding requirement is defined. Therefore, according to the above illustration and the process 40, before the UE turns off the receive diversity according to whether all the plurality of services satisfy the plurality of corresponding requirements, respectively, the UE check each service by using its corresponding condition which may be different for different services.

Please note that, a time at which the UE executes the process 40 is not limited. For example, the network can generate an indication, and transmits the indication to the UE, for indicating the UE to execute the process 40. That is, the network determines when the UE should check whether to turn on/off the receive diversity. Alternatively, the UE can execute the process 40 periodically. That is, the UE periodically checks whether to turn on/off the receive diversity. Further, the UE can execute the process 40, when a service setup request or a service release request is received from the network or generated by the UE. Besides, the plurality of services may belong to various service types. For example, the plurality of services include a circuit switched (CS) service and a packet switched (PS) service. Alternatively, the plurality of services may belong to services transmitted on various channels. For example, the plurality of services include two services, wherein the first service is transmitted on a dedicated physical channel (DPCH) and the second service is transmitted on a high speed DPCH (HS-DPCH).

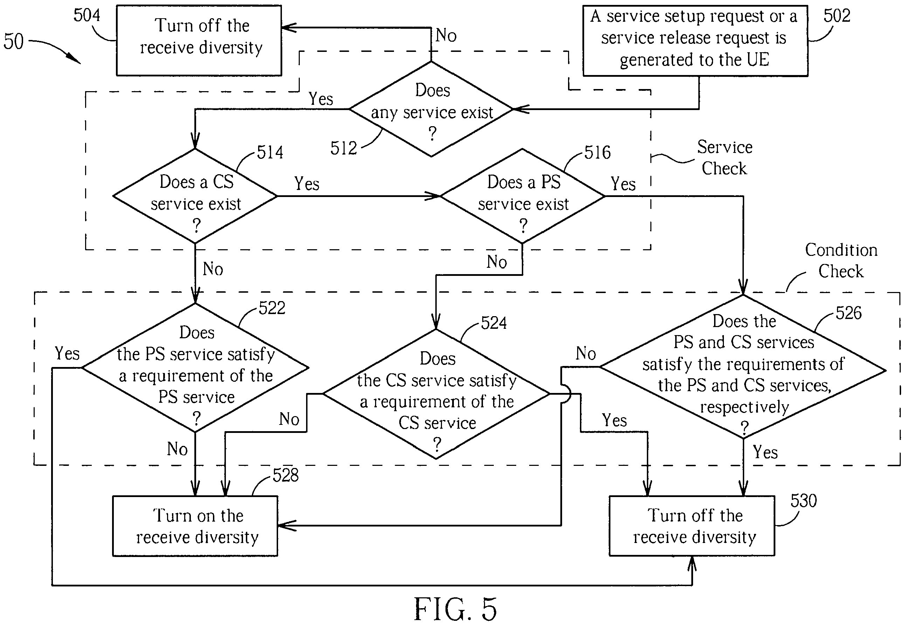

Please refer to Fig. 5, which is a flowchart of a process 50 according to an example of the present invention. The process 50 is utilized in a UE shown in Fig. 1, for handling receive diversity of the UE, to reduce power consumption of the UE. For simplicity, only two services: CS and PS services are considered in the process 50. According to the step 502, when a service setup request for a new service or a service release request for an ongoing service is generated by the UE or received from the network, the UE is triggered to perform the step 512 to check if a service exists. If no service exists, the UE performs the step 504 to turn off the receive diversity. Oppositely, if the service exists, the UE performs the step 514 to check if the CS service exists. If the CS service does not exist, the UE can determine that only the PS service exist and the UE performs the step 522 to check a condition of the PS service. Oppositely, if the CS service exists, the UE performs the step 516 to check if the PS service exists. If the PS service does not exist, the UE can determine that only the CS service exists and the UE performs the step 524 to check a condition of the CS service. Oppositely, if the PS service exists, the UE can determine that both the CS service and PS service exist, and the UE performs the step 526 to check the conditions of the CS service and the PS service. Please note that, a method of checking the service is not limited to the abovementioned steps, as long as the service can be identified for determining the corresponding conditions.

Further, when performing the step 522, the UE determines whether the PS service satisfies a requirement of the PS service. If the PS service satisfies the requirement of the PS service, the UE turns off the receive diversity (i.e., the step 530). Otherwise, the UE turns on the receive diversity (i.e., the step 528). Similarly, when performing the step 524, the UE determines whether the CS service satisfies a requirement of the SS service. If the PS service satisfies the requirement of the CS service, the UE turns off the receive diversity. Otherwise, the UE turns on the receive diversity. On the other hand, when performing the step 526, the UE determines whether the CS service and the PS service satisfy the requirements of the CS service and the PS service, respectively. If both the requirements are satisfied, the UE turns off the receive diversity. Otherwise, the UE turns off the receive diversity. Please note that, the requirement of the CS service can be the CS service is inactive, a quality of the CS service is higher than a predetermined threshold, the CS service is a bursty service, and is not limited. Similarly, the requirement of the PS service can be the PS service is inactive, a quality of the PS service is higher than a predetermined threshold, the PS service is a bursty service, and is also not limited. That is, the requirements of the CS service and the PS service can be different. Besides, the step 502 is not limited to generation of the service setup request and the service release request. For example, the step 502 can be a timer periodically triggering the UE to perform the step 512. Alternatively, the step 502 can be reception of an indication transmitted by the network, for triggering the UE to perform the step 512. Therefore, according to the above illustration and the process 50, the UE can turn on the receive diversity when needed for mitigating the multipath fading experienced to improve the performance of the UE, and can turn off the receive diversity when not needed to reduce the power consumption of the UE.

Please note that, the abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 20.

To sum up, the present invention provides a method utilized in a UE for turning on receive diversity of the UE when needed for mitigating multipath fading experienced to improve performance (e.g. throughput) of the UE, and turning off the receive diversity when not needed to reduce power consumption of the UE. Therefore, not only the performance can be improved, but the power consumption can be saved.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling receive diversity of a mobile device in a wireless communication system for the mobile device, the method comprising:
determining a plurality of corresponding conditions of a plurality of services supported by the mobile device; and
controlling the receive diversity according to the plurality of corresponding conditions, for receiving data transmitted by a network of the wireless communication system.

2. The method of claim 1, wherein controlling the receive diversity according to the plurality of corresponding conditions, for receiving the data transmitted by the network comprises:
turning off the receive diversity, if the plurality of corresponding conditions indicate that the plurality of services satisfy a plurality of corresponding requirements, respectively; and
turning on the receive diversity, if at least one of the plurality of corresponding conditions indicate that at least one of the plurality of services does not satisfy at least one of the plurality of corresponding requirements, respectively.

3. The method of claim 2, wherein a service satisfies a corresponding requirement if the service is inactive, and the service does not satisfy the corresponding requirement if the service is active.

4. The method of claim 3, wherein the service is inactive, if no data for the service is received or transmitted by the mobile device during a time period.

5. The method of claim 3, wherein the service is inactive, if an amount of data for the service stored in a buffer of the mobile device is lower than a predetermined threshold.

6. The method of claim 3, wherein the service is inactive according to an indication transmitted by the network, wherein the indication comprises information of an amount of data for the service to be received by the mobile device.

7. The method of claim 2, wherein a service satisfies a corresponding requirement if a quality of the service is higher than a predetermined threshold, and the service does not satisfy the corresponding requirement if the quality of the service is lower than the predetermined threshold.

8. The method of claim 2, wherein a service satisfies a corresponding requirement if the service is a bursty service.

9. The method of claim 1, wherein the plurality of services belongs to a plurality service types.

10. The method of claim 9, wherein the plurality of service types comprise a circuit switched (CS) service and a packet switched (PS) service.

11. The method of claim 1, wherein the plurality of services are transmitted on a plurality of channels.
